# FASCICULE DE BREVET EUROPEEN

(11) **EP 3 255 939 B1**
(45) Date de publication et mention de la délivrance du brevet: **19.01.2022**
(21) Numéro de dépôt: 16173992.5
(22) Date de dépôt: 10.06.2016
(51) Int. Cl.: H04W 56/00, H04W 52/02

(54) **GESTION DE LA SYNCHRONISATION AVEC UNE BALISE**
VERWALTUNG DER SYNCHRONISIERUNG MIT EINEM IDENTIFIZIERUNGSKENNZEICHEN
MANAGEMENT OF SYNCHRONISATION WITH A BEACON

(43) Date de publication de la demande: 13.12.2017
(73) Titulaire: The Swatch Group Research and Development Ltd., 2074 Marin (CH)
(72) Inventeur: Randjelovic, Zoran, 2035 Corcelles (CH)
(74) Mandataire: Collé, Emmanuel

(56) Documents cités:
- WO-A1-2016/099682
- US-A1- 2013 078 912
- US-A1- 2015 382 304

## Description

La présente invention concerne un ensemble communiquant comprenant un premier terminal (une montre) muni d'un premier module de communication agencé pour communiquer avec une multitude de balises comprenant chacune un émetteur pour l'envoi d'informations, chaque émetteur étant configuré pour envoyer des données selon une périodicité particulière, durant un intervalle particulier.

### ART ANTERIEUR

Le développement des objets connectés a permis le développement d'environnements dans lesquels ces objets connectés sont utilisés. Ces environnements consistent par exemple à proposer l'envoi d'informations via des balises également appelé beacon. Ces balises consistent en des émetteurs utilisant un protocole du type Bluetooth afin de pouvoir envoyer des données. Ces données peuvent être liées à un capteur pour fournir une information de température ou de positionnement ou être juste utilisées pour transmettre des informations par exemple publicitaire.

Ces balises, alimentées par une batterie, ou par un élément de récupération d'énergie comme une cellule solaire par exemple, ou sur secteur sont donc des émetteurs d'information ou de données dont le fonctionnement est le suivant. Il s'agit d'un circuit émetteur avec antenne associé à un circuit de contrôle permettant d'envoyer des données par liaison radiofréquence. Chaque balise est configurée pour envoyer un ou plusieurs messages contenant l'information à diffuser. Ce message est diffusé périodiquement, par exemple sur les trois fréquences d'annonce (advertising en anglais) selon la norme Bluetooth. On comprend alors que le message est diffusé à intervalle constant. Chaque balise ayant son propre intervalle de diffusion, ceux-ci sont décalés l'un par rapport à l'autre, en règle générale, d'une manière aléatoire.

Pour récupérer ces données, un appareil portable comme un téléphone ou un ordinateur active son module de réception en continu afin de balayer les fréquences pour détecter les différentes balises émettrices et en sélectionner au moins une. Le module de réception de l'appareil portable peut alors cibler une ou plusieurs fréquences disponibles de la balise sélectionnée et réceptionner le message envoyé par ladite balise pour des fonctions spécifiques.

Néanmoins, cette configuration de réception pose un problème de consommation électrique. En effet, la consommation électrique est un critère important pour les appareils électroniques portables, car ceux-ci emportent une batterie imposant une autonomie limitée. Or, l'activation en permanence du module de réception, souvent à sensibilité maximale pour détecter toute balise active le plus tôt possible et réceptionner le message de cette balise, a un impact sur l'autonomie dudit appareil électronique portable. Ce critère de la consommation électrique est d'autant plus critique pour les appareils électroniques portables comme les montres ou autres dispositifs au poignet, car ces dernières ont des contraintes plus importantes en termes de consommation électrique.

On peut citer la demande de brevet WO 2016/099682 A1, qui relève de l'Article 54(3) CBE, et qui décrit un système et un procédé pour connecter un dispositif à proximité à un dispositif mobile. Il est défini des dispositifs dans un réseau de communication à Internet de choses. Cependant rien n'est décrit concernant un scanning de balises par un dispositif mobile et une sélection d'une balise par un dispositif à faible énergie en liaison avec le dispositif mobile, pour établir une communication entre la balise et le dispositif à faible énergie avec synchronisation, et une périodicité particulière de la balise sélectionnée et sa durée de décalage transmise par le dispositif mobile.

La demande de brevet US 2013/0078912 A1 décrit un système et un procédé de traitement et de transmission de données de capteurs. Des terminaux sont prévus pour communiquer avec des balises, qui sont des modules à capteurs. Cependant il n'est pas défini qu'un premier terminal à faible énergie sélectionne au moins une des balises détectées par un second terminal à proximité de telle manière à se connecter de manière synchrone sur la base de l'information reçue du second terminal à savoir la périodicité particulière de la balise choisie, sa durée de décalage par rapport à la durée entre un point de référence et le début de l'envoi du message.

### RESUME DE L'INVENTION

La présente invention cherche donc à pallier les inconvénients de l'art antérieur en fournissant une méthode qui optimise la consommation électrique pour synchroniser un appareil portable, dont l'autonomie est critique, avec une balise.

L'invention est telle que définie dans les revendications indépendantes. Certains aspects additionnels sont décrits dans les revendications dépendantes.

### BREVE DESCRIPTION DES FIGURES

Les buts, avantages et caractéristiques du dispositif selon la présente invention apparaîtront plus clairement dans la description détaillée suivante d'au moins une forme de réalisation de l'invention donnée uniquement à titre d'exemple non limitatif et illustrée par les dessins annexés sur lesquels :
- Les figures 1 et 2 représentent schématiquement un ensemble de communication selon l'invention;
- Les figures 3 à 5 représentent schématiquement des diagrammes de fonctionnement de l'ensemble de communication selon l'invention.

### DESCRIPTION DETAILLEE

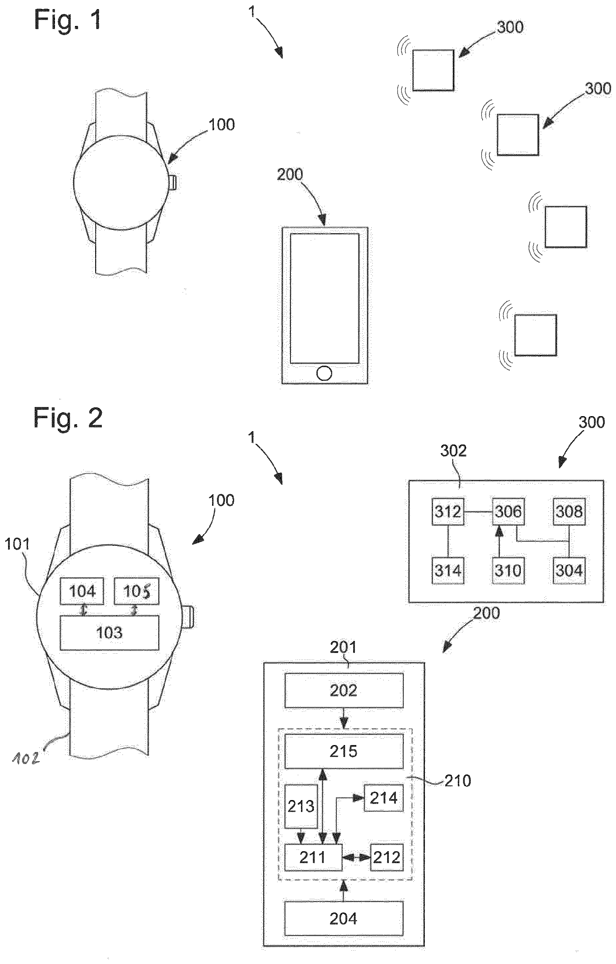

Sur les figures 1 et 2, un ensemble 1 selon l'invention est représenté. Un tel ensemble comprend une multitude de balises 300. Chaque balise 300 se présente sous la forme d'un boitier 302 dans lequel un dispositif électronique est placé. Ce dispositif électronique est alimenté par une unité d'alimentation 304. Cette unité d'alimentation 304 peut être une pile ou un accumulateur ou une unité autonome telle une cellule solaire. L'avantage d'une telle unité autonome est qu'elle est indépendante au niveau énergétique. Une alternative est une alimentation directe au réseau électrique, si disponible.

Le dispositif électronique comporte une unité de calcul ou microcontrôleur 306 associé à une unité mémoire 308. Cette unité mémoire 308 sert à stocker des données et peut être une mémoire non volatile utilisant la technologie flash (NOR, NAND).

Le dispositif électronique comporte également un circuit d'horloge 310 pour le cadencement de la balise 300 et comme base de temps précise pour l'enregistrement et l'envoi de données.

Le dispositif électronique comporte en outre un circuit de communication 312 comprenant au moins une antenne 314 pour communiquer avec l'extérieur. Ce circuit de communication 312 permet en outre d'envoyer (et/ou de recevoir) des données vers des appareils dédiés 100 comme par exemple des téléphones mobiles, des tablettes, des ordinateurs ou des montres.

Pour communiquer, chaque balise 300 est configurée pour envoyer un message Mi c'est-à-dire des données. Ce message Mi est transmis selon un premier protocole pouvant par exemple être un protocole Bluetooth, NFC, Wi-Fi, ZigBee ou autre. Ce message Mi est diffusé avec une ou plusieurs fréquences particulières Fi et avec une périodicité particulière Pi de sorte que le message Mi se répète.

L'ensemble 1 comprend aussi au moins un premier terminal 100. Ce premier terminal est préférentiellement une montre ou un bracelet ou un bijou. Ce premier terminal comprend un boitier 101 auquel est attaché un bracelet 102. Ce boitier comprend un module électronique 103 alimenté par une unité d'alimentation et comprenant une unité de commande tel un microcontrôleur associé à au moins des moyens mémoires, des moyens d'affichage 104 pour afficher des informations et un premier module de communication 105 capable d'envoyer et recevoir des données. Le premier module de communication 105 est configuré pour pouvoir communiquer avec le circuit de communication 312 des balises 300.

L'invention se propose de synchroniser le premier terminal 100 avec au moins une des balises 300 pour que ledit premier terminal 100 puisse recevoir les données Mi de cette balise 300.

Pour cela, l'invention se propose astucieusement d'utiliser un second terminal 200. Ce second terminal 200 est un appareil électronique du type téléphone ou ordinateur ou tablette informatique ou tout autre appareil comme une passerelle (gateway en anglais) mise à disposition dans des lieux publics (gares, aéroports, centres commerciaux, etc...) et fournissant ce type de service - catalogue. Ce second terminal comprend un boitier 201 dans lequel un second module électronique 210 est agencé. Ce second module électronique 210 est connecté à des moyens d'affichage 202 et alimenté par une alimentation 204. Le second module électronique 210 comprend une unité de calcul 211 connectée à des moyens mémoires 212, des moyens de commande 213, des capteurs 214 ainsi qu'un second module de communication 215. Ce second module de communication 215 est apte à utiliser des protocoles de communication tels que Bluetooth, GSM, Wi-Fi ou encore ZigBee.

Ce second terminal 200 est utilisé comme moyen intermédiaire pour effectuer l'opération de détection, et élaborer une liste de balises à proximité. Pour ce faire, le second terminal 200 est utilisé de sorte que son second module de communication 215 soit mis en fonctionnement et utilise au moins un protocole de communication lui permettant de communiquer avec le premier terminal 100 et les balises 300.

Le fonctionnement du second module de communication 215 du second terminal 200 est le suivant. Une première étape consiste à utiliser le second module de communication afin d'effectuer un balayage. Ce balayage est effectué en utilisant le protocole commun entre le second terminal 200 et la pluralité de balises 300. Ce balayage permet d'identifier les balises 300 se trouvant à portée.

Une fois ces balises 300 détectées, une seconde étape consiste à recueillir des informations. Pour cela, le second terminal 200 se met en mode réception afin de récupérer, pour chaque balise 300, son identifiant et éventuellement certaines de ses propriétés (type de balise, type d'information disponible, protocoles disponibles, ...). Cette fenêtre d'écoute du second terminal 200 permet aussi, pour chaque balise, de récupérer des informations d'émissions. En effet, chaque balise 300 possède sa périodicité particulière Pi. Ces informations sont récupérées par le second terminal 200. Pour obtenir cette information de périodicité, le second terminal 200 peut analyser l'émission de chaque balise pour calculer ces données ou alors envoyer une requête pour récupérer les informations. L'analyse de chaque balise 300 consiste à écouter chaque balise sur un laps de temps prédéfini de sorte à pouvoir mesurer la périodicité particulière Pi, obtenir certaines informations additionnelles, si disponibles, ainsi que la durée du message M.

Une fois au moins les informations de périodicité et de durée de décalage par rapport à un instant défini récupérées pour chaque balise 300, le second terminal 200 les compile afin de faire une liste ou un catalogue qu'il va envoyer, via le second module de communication 215, vers le premier terminal 100 qui écoute à intervalle régulier et optimisé si un message du terminal 200, souvent très proche du terminal 100, arrive.

Le premier terminal 100 devient alors apte à sélectionner au moins une balise 300. Pour ça, la sélection de la balise sur la liste peut être manuelle ou automatique. Pour un choix manuel, cette liste est affichée sur les moyens d'affichage du premier terminal afin que l'utilisateur puisse, par l'intermédiaire des moyens de commande, prendre connaissance des différentes balises aux alentours et en sélectionner une. Dans le cas d'une sélection automatique, cette sélection pourra être opérée en se basant sur des critères comme des favoris, le type d'information souhaitée, le protocole disponible ou une fréquence de sélection.

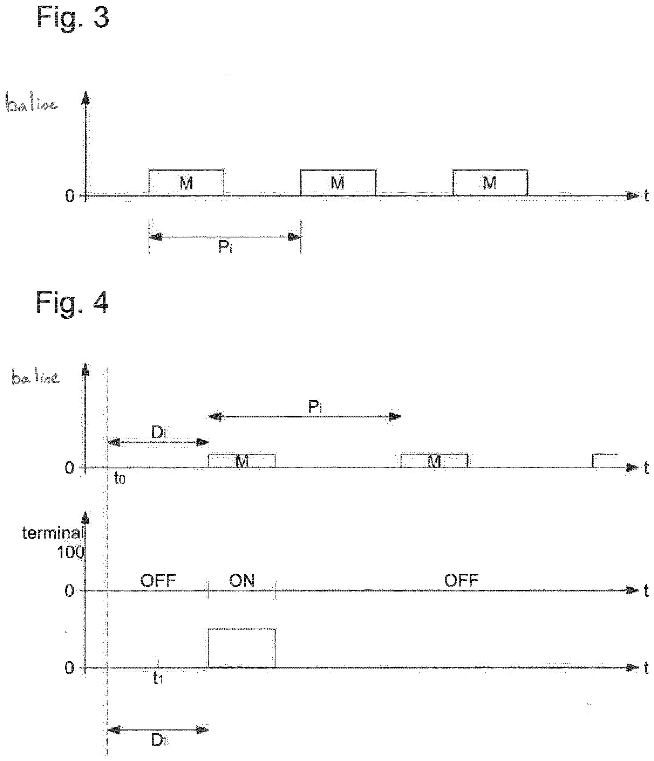

Une fois la balise sélectionnée, le premier terminal peut passer en mode écoute pour récupérer le message envoyé par la balise. Astucieusement, le premier terminal utilise les données concernant la balise fournies par le second terminal pour optimiser la consommation électrique et n'écouter que lorsque c'est nécessaire et pour la durée nécessaire à obtenir l'entier du message Mi. Effectivement, l'information de périodicité Pi permet au premier terminal d'activer le mode écoute c'est-à-dire réception du premier module de communication uniquement au besoin. Pour cela, une autre information est fournie par le second terminal 200, cette autre information est une durée de décalage Di ou offset. Cette durée de décalage Di correspond à la durée entre un point de repère temporel défini et le début de l'envoi du message par la balise. Dans l'illustration de la figure 3, on peut y voir un diagramme temporel d'émission de données d'une balise 300. On constate que cette balise envoie périodiquement un message M. Or, avoir la périodicité Pi n'est pas suffisante pour avoir une synchronisation entre le premier terminal 100 et la balise 300. Pour cela, il est nécessaire d'avoir la durée de décalage Di qui permet, à partir d'un instant t0 défini/donné, de connaitre le temps restant avant le prochain envoi du message M.

Par conséquent, lorsque le premier terminal 100 se met en mode de réception de données, il va, à un instant t1 et par rapport à l'instant t0 donné/défini, utiliser la durée de décalage Di comme visible à la figure 4. Dès lors, le premier terminal 100 va pouvoir activer son premier module de communication 105 en mode réception ON durant le laps de temps exact pendant lequel la balise envoie le message M. Cette configuration de synchronisation permet avantageusement de limiter le temps de fonctionnement du premier module de communication et donc de limiter la consommation électrique.

Dans une variante, il est envisageable que le premier terminal 100 puisse recevoir des messages de plusieurs balises 300. Dans ce cas, le premier terminal 100 récupère les informations de chaque balise 300 récupérées via le second terminal 200. Ces informations sont compilées afin de définir une séquence d'écoute et de réception. En effet, chaque balise possède sa propre périodicité Pi et sa propre durée de décalage Di par rapport à un instant donné/défini. De cette façon, il devient nécessaire de procéder à une étape de gestion en procédant à des calculs afin de déterminer laquelle des balises devra être écoutée en premier. Ces calculs sont faits à partir des durées de décalage et des périodicités.

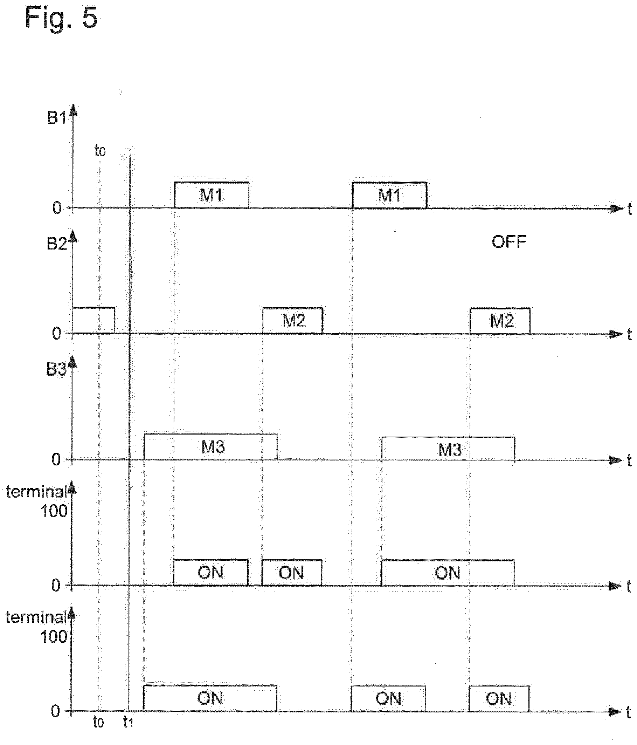

Soit l'exemple de la figure 5, dans lequel des diagrammes temporels de différentes balises B1, B2 et B3 sont représentés. La balise B1 envoie un message M1 avec une périodicité P1, la balise B2 envoie un message M2 avec une périodicité P2 et la balise B3 envoie un message M3 avec une périodicité P3. On constate sur cette figure 5 que les périodicités P1, P2 et P3 sont différentes les unes des autres et que les tailles des messages M1, M2 et M3 sont différentes. Ainsi, il devient nécessaire de gérer ces balises afin de pouvoir écouter les messages de ces balises de manière à limiter l'énergie nécessaire pour récupérer tous les messages. Dans la configuration représentée sur la figure 5, on constate qu'à partir de l'instant t0, il est possible d'écouter les messages des différentes balises selon l'ordre suivante : le message M1 puis le message M2 et enfin le message M3. Une variante d'ordre d'écoute peut être le message M3 puis le message M1 puis le message M2.

En cas de conflit c'est-à-dire de messages Mi qui sont diffusés en même temps, le module électronique 103 du premier terminal 100 est capable de sauter l'écoute de ces messages Mi.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Ensemble de communication comprenant un premier terminal (100), qui est une montre ou un bracelet ou un bijou, et muni d'un premier module de communication agencé pour communiquer avec une multitude de balises (300) comprenant chacune un circuit de communication permettant l'envoi de données (Mi) avec une périodicité particulière (Pi),
ledit ensemble comprenant en outre un second terminal (200) comportant un second module de communication, ledit second terminal étant agencé pour, par l'intermédiaire dudit second module de communication, balayer son environnement, et détecter la présence des balises à portée, puis récupérer, pour chaque balise détectée, la périodicité particulière et une durée de décalage correspondant à la durée entre un point de référence et le début de l'envoi du message (Mi) et les envoyer au premier terminal, et
ledit premier terminal étant agencé pour écouter le second terminal à intervalle régulier et pour sélectionner au moins une des balises détectées par le second terminal et activer ledit premier module de communication de manière synchrone avec la balise choisie sur la base des informations de périodicité particulière et de durée de décalage de la balise reçues du second terminal, pour récupérer au moins une information de cette balise.

2. Ensemble de communication selon la revendication 1, **caractérisé en ce que** ledit premier terminal est une montre et **en ce que** ledit second terminal est choisi dans la liste comprenant : ordinateur, tablette électronique, téléphone mobile ou tout autre appareil comme une passerelle fournissant ce type de service.

3. Ensemble de communication selon la revendication 1, **caractérisé en ce que** ledit premier terminal comprend en outre des moyens d'affichage pour afficher les données envoyées par le second terminal et des moyens de commande pour sélectionner la balise souhaitée parmi celles détectées par le second terminal.

4. Procédé de fonctionnement d'un ensemble de communication comprenant un premier terminal (100), qui est une montre ou un bracelet ou un bijou, et muni d'un premier module de communication agencé pour communiquer avec une multitude de balises (300) comprenant chacune un circuit de communication permettant l'envoi de données (Mi) avec une périodicité particulière (Pi), un second terminal (200) comportant un second module de communication, **caractérisé en ce que** ledit procédé comprend les étapes suivantes :
- Activer le second module de communication ;
- Balayer l'environnement avec le second module de communication du second terminal afin de détecter les balises à portée et de récupérer, pour chaque balise, au moins une information de périodicité et une information de durée de décalage par rapport à un instant défini ;
- Envoyer au premier terminal qui est en mode d'écoute du second terminal à intervalle régulier, pour chaque balise détectée par le second terminal, ladite information de périodicité et ladite information de durée de décalage par rapport à un instant défini ; et
- Sélectionner, dans le premier terminal, au moins une des balises détectées par le second terminal puis configurer et activer le premier module de communication dudit premier terminal afin de le synchroniser avec la balise choisie sur la base des informations de périodicité particulière et de durée de décalage de la balise reçues du second terminal.

5. Procédé selon la revendication 4, **caractérisé en ce que** l'étape de récupération d'information se fait par calcul lors de l'écoute.

6. Procédé selon la revendication 4, **caractérisé en ce que** l'étape de récupération d'information se fait par envoi d'une requête.

7. Procédé selon l'une des revendications 4 à 6, **caractérisé en ce que** l'étape de sélection de la balise est faite automatiquement en fonction de paramètres existants dans le premier ou le second terminal.

8. Procédé selon l'une des revendications 4 à 6, **caractérisé en ce que** l'étape de sélection de la balise est réalisée en affichant la liste des balises détectées sur des moyens d'affichage du premier terminal et en permettant à l'utilisateur de faire la sélection via des moyens de commande du premier terminal.

9. Procédé selon l'une des revendications 4 à 8, **caractérisé en ce que** l'étape de sélection permet la sélection d'au moins deux balises et **en ce que** ledit procédé comprend en outre, entre la sélection et l'activation adéquate du premier module de communication, une étape de gestion déterminant l'ordre d'écoute des balises en procédant à des calculs faits à partir des durées de décalage et des périodicités des balises sélectionnées.

10. Procédé selon l'une des revendications 4 à 9, **caractérisé en ce que** ledit premier terminal est une montre et **en ce que** ledit second terminal est choisi dans la liste comprenant : ordinateur, tablette électronique, téléphone mobile ou tout autre appareil comme une passerelle fournissant ce type de service.

## Patentansprüche

1. Kommunikationsanordnung, die ein erstes Endgerät (100) umfasst, bei dem es sich um eine Uhr oder ein Armband oder ein Schmuckstück handelt und das mit einem ersten Kommunikationsmodul ausgestattet ist, das so eingerichtet ist, dass es mit einer Vielzahl von Baken (300) kommuniziert, die jeweils eine Kommunikationsschaltung umfassen, die das Senden von Daten (Mi) mit einer bestimmten Periodizität (Pi) ermöglicht,
wobei die Anordnung weiter ein zweites Endgerät (200) umfasst, das ein zweites Kommunikationsmodul umfasst, wobei das zweite Endgerät so eingerichtet ist, dass es mittels des zweiten Kommunikationsmoduls seine Umgebung abtastet und das Vorhandensein der Baken in Reichweite erkennt, und anschließend bei jeder erkannten Bake die bestimmte Periodizität und eine Versatzzeit erfasst, die der Zeit zwischen einem Referenzpunkt und dem Beginn des Sendens der Nachricht (Mi) entspricht, und diese an das erste Endgerät sendet, und
wobei das erste Endgerät so eingerichtet ist, dass es das zweite Endgerät in regelmäßigem Intervall abhört und mindestens eine der vom zweiten Endgerät erkannten Baken auswählt und auf Basis der Informationen bezüglich der bestimmten Periodizität und der Versatzzeit der Bake, die vom zweiten Endgerät empfangen wurden, das erste Kommunikationsmodul mit der gewählten Bake synchron aktiviert, um mindestens eine Information von dieser Bake zu erfassen.

2. Kommunikationsanordnung nach Anspruch 1, **dadurch gekennzeichnet, dass** es sich bei dem ersten Endgerät um eine Uhr handelt, und dadurch, dass das zweite Endgerät aus der Liste gewählt ist, welche umfasst: Computer, elektronisches Tablet, Mobiltelefon, oder jedes andere Gerät wie etwa ein Gateway, das diese Art von Dienst bereitstellt.

3. Kommunikationsanordnung nach Anspruch 1, **dadurch gekennzeichnet, dass** das erste Endgerät weiter Anzeigemittel umfasst, um die vom zweiten Endgerät gesendeten Daten anzuzeigen, und Steuermittel, um die gewünschte Bake unter den vom zweiten Endgerät erkannten Baken auszuwählen.

4. Verfahren zum Betreiben einer Kommunikationsanordnung, die ein erstes Endgerät (100), bei dem es sich um eine Uhr oder ein Armband oder ein Schmuckstück handelt und das mit einem ersten Kommunikationsmodul ausgestattet ist, das so eingerichtet ist, dass es mit einer Vielzahl von Baken (300) kommuniziert, die jeweils eine Kommunikationsschaltung umfassen, die das Senden von Daten (Mi) mit einer bestimmten Periodizität (Pi) ermöglicht, und ein zweites Endgerät (200) umfasst, das ein zweites Kommunikationsmodul umfasst, **dadurch gekennzeichnet, dass** das Verfahren die folgenden Schritte umfasst:
- Aktivieren des zweiten Kommunikationsmoduls;
- Abtasten der Umgebung mit dem zweiten Kommunikationsmodul des zweiten Endgeräts, um die Baken in Reichweite zu erkennen, und Erfassen, bei jeder Bake, mindestens einer Information bezüglich der Periodizität und einer Information bezüglich der Versatzzeit in Bezug auf einen definierten Zeitpunkt;
- Senden der Information bezüglich der Periodizität und der Information bezüglich der Versatzzeit in Bezug auf einen definierten Zeitpunkt für jede erkannte Bake durch das zweite Endgerät an das erste Endgerät, das sich in einem Modus befindet, in dem es das zweite Endgerät in regelmäßigem Intervall abhört; und
- Auswählen mindestens einer der vom zweiten Endgerät erkannten Baken im ersten Endgerät, und anschließend Konfigurieren und Aktivieren des ersten Kommunikationsmoduls des ersten Endgeräts, um dieses auf Basis der Informationen bezüglich der bestimmten Periodizität und der Versatzzeit der Bake, die vom zweiten Endgerät empfangen wurden, mit der gewählten Bake zu synchronisieren.

5. Verfahren nach Anspruch 4, **dadurch gekennzeichnet, dass** der Schritt des Erfassens von Informationen durch Berechnung beim Abhören erfolgt.

6. Verfahren nach Anspruch 4, **dadurch gekennzeichnet, dass** der Schritt des Erfassens von Informationen durch Senden einer Anfrage erfolgt.

7. Verfahren nach einem der Ansprüche 4 bis 6, **dadurch gekennzeichnet, dass** der Schritt des Auswählens der Bake automatisch in Abhängigkeit von Parametern erfolgt, die im ersten oder dem zweiten Endgerät bestehen.

8. Verfahren nach einem der Ansprüche 4 bis 6, **dadurch gekennzeichnet, dass** der Schritt des Auswählens der Bake ausgeführt wird, indem die Liste der erkannten Baken auf Anzeigemitteln des ersten Endgeräts angezeigt wird, und indem es dem Benutzer ermöglicht wird, über Steuermittel des ersten Endgeräts die Auswahl zu treffen.

9. Verfahren nach einem der Ansprüche 4 bis 8, **dadurch gekennzeichnet, dass** der Schritt des Auswählens das Auswählen von mindestens zwei Baken ermöglicht, und dadurch, dass das Verfahren zwischen dem Auswählen und dem entsprechenden Aktivieren des ersten Kommunikationsmoduls weiter einen Verwaltungsschritt umfasst, der die Abhörreihenfolge der Baken bestimmt, indem Berechnungen vorgenommen werden, die auf Grundlage der Versatzzeiten und der Periodizitäten der ausgewählten Baken erfolgen.

10. Verfahren nach einem der Ansprüche 4 bis 9, **dadurch gekennzeichnet, dass** es sich bei dem ersten Endgerät um eine Uhr handelt, und dadurch, dass das zweite Endgerät aus der Liste gewählt ist, welche umfasst: Computer, elektronisches Tablet, Mobiltelefon, oder jedes andere Gerät, wie etwa ein Gateway, das diese Art von Dienst bereitstellt.

## Claims

1. Communication assembly comprising a first terminal (100), which is a watch or a bracelet or a piece of jewellery, and provided with a first communication module arranged to communicate with a plurality of beacons (300), each comprising a communication circuit to enable data (Mi) to be sent with a particular periodicity (Pi),
said assembly additionally comprising a second terminal (200) comprising a second communication module, said second terminal being arranged to scan its environment by means of said second communication module and to detect the presence of beacons within range then to retrieve for each beacon detected the particular periodicity and a time offset corresponding to the period between a reference point and the start of the transmission of the message (Mi) and send them to the first terminal, and
said first terminal being arranged to monitor to the second terminal at regular intervals and to select at least one of the beacons detected by the second terminal and activate said first communication module synchronously with the chosen beacon on the basis of particular periodicity information and time offset of the beacon received from the second terminal, to retrieve at least one item of information from this beacon.

2. Communication assembly according to claim 1, **characterised in that** said first terminal is a watch, and **in that** said second terminal is chosen from the list comprising: computer, electronic tablet, mobile telephone or any other device such as a gateway providing this type of service.

3. Communication assembly according to claim 1, **characterised in that** said first terminal additionally comprises display means to display data sent by the second terminal and control means to select the desired beacon from those detected by the second terminal.

4. Method for operating a communication assembly comprising a first terminal (100), which is a watch or a bracelet or a piece of jewellery, and provided with a first communication module arranged to communicate with a plurality of beacons (300), each comprising a communication circuit to enable data (Mi) to be sent with a particular periodicity (Pi), a second terminal (200) comprising a second communication module, **characterised in that** said method comprises the following steps:
- Activate the second communication module;
- Scan the environment with the second communication module of the second terminal in order to detect the beacons within range and to retrieve for each beacon at least one item of periodicity information and one item of information regarding the time offset in relation to a defined instant;
- Send to the terminal which is in the mode of monitoring the second terminal at regular intervals, for each beacon detected by the second terminal, said periodicity information and said information regarding the time offset in relation to a defined instant; and
- In the first terminal, select at least one of the beacons detected by the second terminal then configure and activate the first communication module of said first terminal in order to synchronise it with the chosen beacon on the basis of particular periodicity information and time offset of the beacon received from the second terminal.

5. Method according to claim 4, **characterised in that** the step of information retrieval is performed by calculation during monitoring.

6. Method according to claim 4, **characterised in that** the step of information retrieval is performed by sending a request.

7. Method according to one of claims 4 to 6, **characterised in that** the step of selecting the beacon is performed automatically on the basis of existing parameters in the first or the second terminal.

8. Method according to one of claims 4 to 6, **characterised in that** the step of selecting the beacon is performed by displaying the list of beacons detected on the display means of the first terminal and by enabling the user to make the selection via the control means of the first terminal.

9. Method according to one of claims 4 to 8, **characterised in that** the selection step allows the selection of at least two beacons, and **in that**, between the selection and the adequate activation of the first communication module, said method additionally comprises a management step determining the monitoring order of the beacons by conducting calculations made from the offset and periodicity durations of the selected beacons.

10. Method according to one of claims 4 to 9, **characterised in that** said first terminal is a watch, and **in that** said second terminal is chosen from the list comprising: computer, electronic tablet, mobile telephone or any other device such as a gateway providing this type of service.
